# EUROPEAN PATENT SPECIFICATION

(11) **EP 2 006 492 B1**
(45) Date of publication and mention of the grant of the patent: **21.07.2010**
(21) Application number: 07110480.6
(22) Date of filing: 18.06.2007
(51) Int. Cl.: F01D 15/10, F02C 9/28, H02K 7/18

(54) **An arrangement, a method and a plant for compressing a gas or fluid**
Anordnung, Verfahren und Anlage zur Kompression eines Gases oder einer Flüssigkeit
Agencement, procédé et usine pour compresser un gaz ou un liquide

(43) Date of publication of application: 24.12.2008
(73) Proprietor: ABB Research Ltd, 8050 Zürich (CH)
(72) Inventor: Liljestrand, Lars, 72242 Västerås (SE); Dijkhuizen, Frans, 72482 Västerås (SE); Sannino, Ambra, 72219 Västerås (SE)
(74) Representative: Olsson, Jan

(56) References cited:
- EP-A- 0 679 800
- EP-A- 0 680 139
- WO-A-98/11643
- US-A- 3 591 844

## Description

### TECHNICAL FIELD OF THE INVENTION AND PRIOR ART

The present invention relates to an arrangement for compressing a gas or fluid, comprising: at least one high power compressor, at least one electric machine for each said high power compressor, said machine being arranged to drive said compressor, a device adapted to deliver electric power for operation of each said electric machine, an apparatus adapted to adjust the frequency of electric power for said electric machine operation, said device comprising at least one electric generator and at least one gas turbine adapted to drive said generator for generating electric power for said electric machine operation, as well as a plant for liquefying natural gas (LNG), a method for operating such a plant and a method for driving a high power compressor according to the preambles of the corresponding appended independent claims.

The invention is directed to all types of equipment involving the use of a high power compressor for compressing a gas or fluid, in which "high power" means that the compressor may be operated at a power exceeding 10 MW. Any type of gas or fluid may be compressed by said compressor for different purposes, and "gas" is here to be interpreted to also comprise gas mixtures, such as air.

For illuminating but not in any way restricting the present invention the case of using such an arrangement for compressing a refrigerant used to liquefy natural gas in a plant for liquefying natural gas (LNG) will now be described.

When cooling natural gas to temperatures of about -160°C it condenses into a liquid, which takes up 1/600 of the volume of gaseous natural gas. This means that it may be an interesting alternative to pipelines to transport liquefied natural gas by different types of vehicles, primarily ships, but also other types of motor vehicles. It is in fact mostly cheaper to liquefy and ship natural gas than transporting this natural gas by offshore pipelines over distances of more than 1000 km or by onshore pipelines over distances greater than 3500 km.

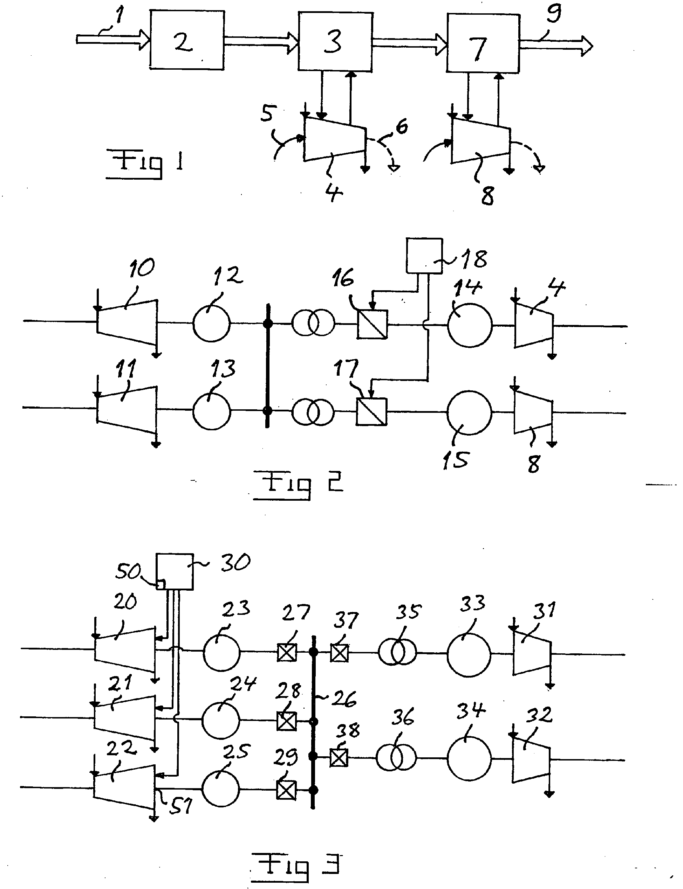

The liquefying process can be done in different ways, but in general it includes one or more compression stages, where a suitable refrigerant is compressed by refrigerant compressors as illustrated in Fig 1. Natural gas is arriving to the plant at 1 and pretreated at 2 for removing contaminants therefrom. The natural gas having a temperature of about 40°C is then reaching a precooling stage 3, in which it is precooled to a temperature of about -35°C by heat exchange with a refrigerant compressed in a high power compressor 4, in which the arrows 5 and 6 indicate supply of fuel and production of waste heat, respectively. The precooled natural gas arrives then to a second compression stage 7 in which it is liquefied by being cooled to about -160°C by heat exchange with a refrigerant compressed in a further high power compressor 8. Thus, liquefied natural gas (LNG) is delivered at 9 for being filled in large containers on ships or the like. The traditional solution for driving said high power compressors was a mechanical drive (direct drive) based on a gas turbine directly connected to said compressors combined with a said electric machine drive in the form of variable-speed electrical helper drives. These helper drives involve an electric machine mechanically connected to the compressor, and a gas turbine is utilized for obtaining the electric power for the operation of said electric machine by driving an electric generator. The reason for using a gas turbine for generating said electric power is that natural gas available may then be used for power generation. However, it is emphasized that the invention is not restricted to the fact that natural gas is used as fuel in a said gas turbine. Known disadvantages of this solution are low efficiency, high maintenance requirements and the requirement of bigger gas turbines connecting to the compressors as a consequence of an ongoing attempt to increase the productivity of a said plant, i.e. to be able to produce an increasing amount of liquefied natural gas per time unit. This means in the case of such a direct drive a need of such bigger gas turbines available in low numbers on the market resulting in long delivery times. Other disadvantages are comparatively high maintenance costs of such a large gas turbine, high emissions of CO₂ and a high fuel consumption.

It has therefore been suggested to replace said direct drive by an electric drive of the type illustrated in Fig 2, in which gas turbines 10, 11 driving an electric generator 12, 13 are only arranged in a device for generating electric power for operation of an electric machine 14, 15 larger than said helper drives driving the compressor 4, 8 in question. A frequency converter 16, 17 based on thyristors is used for providing each electric machine with electric power of a suitable frequency. The converters 16, 17 are for that sake controlled by a control unit 18. The converters may for example be based on load commutated inverter (LCI) technology.

An advantage of such an electric drive with respect to a direct drive described above is that gas turbines are now only used for delivering electric power to said electric machines, which means that smaller gas turbines may be used, since more than one gas turbine may be used for delivering electric power to each said electric machine and by that compressor, which not only results in a better availability and shorter delivery times of such gas turbines but also in an increased redundancy. Other advantages of an electric drive according to Fig 2 with respect to a said direct drive is an increased efficiency, lower maintenance requirements, lower emissions of CO₂ and a reduced fuel consumption.

However, a problem of an arrangement according to Fig 2 using load commutated inverters is that the operation of said load commutated inverters 16, 17 generates interharmonics, i.e. harmonic components of frequencies that are not integer multiples of the fundamental frequency. When the electric machine, i.e. electric motor, is operating at variable speed the harmonic frequencies vary. When operating close to the rated speed of the electric machine, a small difference between the frequency of an electric grid in the area where the plant is located and the frequency on the machine side will give harmonic components below the fundamental, or subharmonics, which can give subsynchronous resonance (SSR) problems in the generator 12, 13 and a possible gearbox not shown in the Figure. Furthermore, load commutated inverters are also sensitive to voltage dips, which may cause big problems, such as compressor damage.

An arrangement for compressing a gas or fluid according to the preamble of appended claim 1 is already known through EP-A-0680139. However, in the arrangement disclosed in EP-A-0680139 the frequency of the electric power for the operation of the electric machine is controlled by controlling an inverter in which the inverter is controlled so as to obtain a frequency of the electric power for the operation of the electric machine fitting to the rotational speed of the output shaft of a gas turbine.

### SUMMARY OF THE INVENTION

The object of the present invention is to provide an arrangement of the type defined in the introduction, which involves an improvement with respect to such arrangements already known.

This object is according to the invention obtained by providing such an arrangement with the features listed in the characterizing part of appended claim 1. Thus, variable-speed operation is obtained by operating the gas turbine at variable speed in the desired range, which then means that the whole arrangement will be operated at a variable frequency. Accordingly, no power electronics of load commutated inverter type is used, so that there are no problems with interharmonics or sensitivity to voltage dips, which results in a robust arrangement. Additionally, no power electronics of any type is used, so that losses due to power-electronics conversion are avoided.

By the fact that said means is adapted to control the rotational speed of said output shaft of the gas turbine for delivering electric power for said electric machine operation of a frequency being substantially higher than the frequency of an electric grid in the area where the arrangement is located and at least 65 Hz, said high power compressor may be driven by an electric machine directly connected to for instance a 70 Hz grid with the purpose of increasing the output power from the electric machine driving the compressor. By increasing the frequency from for instance 50 Hz, which may be the frequency of electric power available through an electric grid in the area where the arrangement is located, to 70 Hz, it is for example possible to get 70 MW out of a 50 MW electric machine. The design of the machine has only to be slightly modified to be able to withstand the higher mechanical stress due to operating at higher rotational speed. This means that the need of an increased power of said compressors may be met with a shorter mechanical axes of said electric machine leading to fewer critical speeds with resonance points of the electric machine.

According to an embodiment of the invention said arrangement comprises a plurality of couples of a said gas turbine and a said electric generator connected in parallel with each other. As already stated, this results in a possibility to have smaller gas turbines and also in an increased redundancy of the arrangement.

According to another embodiment of the invention said means of said apparatus is adapted to provide individual control of the rotational speed of said output shaft of said gas turbines. This opens up for the possibility to obtain an electric power of different frequencies through different generators, which means that in an arrangement having several high power compressors which may not be operated at the same speed these may in this way be operated at different speeds.

Said couples of gas turbine and generator may be connected to a bus bar in common, in which said electric machine connected to said at least one high power compressor is connected to said bus bar, or said couples of gas turbine and generator are divided into at least two groups connected to a bus bar part each. It is then also possible that the arrangement comprises means for optionally interconnecting at least two said bus bar parts. This makes it possible to both drive different high power compressors of the arrangement through different couples of gas turbine and electric generator and to use a different number of such couples for driving a said high power compressor.

According to another embodiment of the invention the arrangement comprises members adapted to connect and disconnect at least one of said couples of said gas turbine and generator with respect to a bus bar part to which a said electric machine is connected. The electric power delivered to a said electric machine may then be controlled by controlling said members.

According to another embodiment of the invention the arrangement comprises a plurality of said compressors connected to a bus bar in common connecting to one or more said couples of said gas turbine and generator. It is also possible that one or more of said compressors are connected to each said bus bar part, which opens up for an individual control of the respective compressor if desired.

According to another embodiment of the invention the arrangement comprises only one compressor connected to one of said bus bar parts, and said interconnecting means is adapted to be controlled to change the number of couples of gas turbine and generator for feeding electric power to said compressor by interconnecting or disconnecting said bus bar parts.

According to another embodiment of the invention the arrangement comprises at least two compressors connected to different said bus bar parts.

According to a further embodiment of the invention said arrangement comprises a Voltage Source Converter adapted to connect a High Voltage Direct Current network to a bus bar for feeding electric power for said electric machine operation, and said means of said apparatus is adapted to control said Voltage Source Converter to generate an alternating voltage of a frequency corresponding to the electric power frequency obtained by said control of the rotational speed of a said output shaft of a said gas turbine of said arrangement. By using a Voltage Source Converter for generating an alternating voltage used for driving an electric machine for driving a high power compressor no problems with said interharmonics are created, and such a converter may be controlled to generate an alternating voltage of the same frequency as the alternating voltage generated by a said electric generator and by that assist said couples of gas turbine and electric generator in providing electric power for said electric machine operation.

According to another embodiment of the invention each said electric machine for each said high power compressor of said arrangement is adapted to operate at a power exceeding 10 MW, advantageously exceeding 50 MW, preferably being at least 60 MW and most preferred 60-80 MW when controlling said output shaft of a said gas turbine for obtaining a frequency of electric power for said electric machine operation of 70 Hz. By utilizing a said frequency of 70 Hz for the electric power for operation of a said electric machine powers in the order of 60-80 MW may be obtained without increasing the length of the drive train of such a machine with respect to such a machine constructed for a power of 50 MW at 50 Hz.

According to another embodiment of the invention said at least one compressor is adapted to compress a refrigerant used to cool and/or liquefy a gas, which is a suitable application of such an arrangement.

The invention also relates to a plant for liquefying natural gas (LNG), which is characterized in that it comprises at least one arrangement according to the invention, and that said high power compressor is adapted to compress a refrigerant used to cool and/or liquefy natural gas. This results in a number of advantages of such a plant appearing from the discussion above, especially a possibility to in a favourable way obtain an increased amount of liquefied natural gas produced per time unit.

According to another embodiment of the invention said arrangement has at least two said compressors adapted to compress a said refrigerant, at least one compressor for precooling natural gas and at least one for liquefying such precooled natural gas.

The invention also relates to a method for driving a high power compressor according to the appended independent claim for such a method, which results in a very simple controlling of the frequency of the electric power for operation of a said electric machine while solving the problems of the frequency control carried out according to such methods already known.

The invention also relates to a method for operating a plant for liquefying natural gas according to the appended claims therefor. The advantages thereof appear clearly from the discussion above of an arrangement according to the present invention.

Further advantages and advantageous features of the invention will appear from the following description.

### BRIEF DESCRIPTION OF THE DRAWINGS

With reference to the appended drawings below follows a specific description of embodiments of the invention cited as examples.

In the drawings:
- Fig 1: is a very simplified schematic view illustrating the principles of the operation of a plant for liquefying natural gas (LNG) to which the present invention may be applied,
- Fig 2: is a simplified view illustrating the construction of an arrangement already known for compressing a gas or fluid, and
- Figs 3-6: are very schematic views illustrating the construction of arrangements according to different embodiments of the invention, which may suitably be used in a plant for liquefying natural gas.

### DETAILED DESCRIPTION OF EMBODIMENTS OF THE INVENTION

Fig 3 illustrates an arrangement according to a first embodiment of the invention suitable to be used for driving high power compressors in a plant for liquefying natural gas of the type shown in Fig 1. The arrangement comprises several couples of a gas turbine 20-22 and an electric generator 23-25 connected to a bus bar 26 in common through a member 27-29 adapted to connect and disconnect them with respect thereto, and said members may for instance be any type of switch. It is pointed out that the number of couples of gas turbine and generator connected to the bus bar 26 may be higher or lower than shown in Fig 3, such as for instance 5-15. The arrangement comprises an apparatus 30 with means 50 adapted to adjust the frequency of electric power generated by the generators by controlling said gas turbines 20-22 to have an output shaft 51 thereof rotating at a speed corresponding to said frequency.

Two high power compressors 31, 32 are connected to an electric machine 33, 34 each, which in its turn is connected through a transformer 35, 36 and a said connecting and disconnecting member 37, 38 to said bus bar 26. The two compressors 31, 32 may have the same task, such as compressing a refrigerant used for precooling natural gas, but they may also have different tasks: the compressor 31 is for instance adapted to obtain such precooling, whereas the compressor 32 is adapted to compress a refrigerant used to cool gaseous natural gas for liquefying thereof.

Accordingly, a control of the rotational speed of the output shafts of the gas turbines 20-22 through said apparatus 30 results in a control of the frequency of the electric power delivered through the generators 23-25 to said bus bar 26 and by that to said electric machines 33, 34 for driving the compressors 31, 32. When there is a desire to drive the respective electric machine at a high power the frequency of said electric power is preferably controlled to be substantially higher than the frequency of an electric grid in the area where the arrangement is located, which normally will be 50 Hz or 60 Hz. However, this definition is intended to cover also the case of arranging such a plant completely isolated, e.g. in a desert or other area where there is no electric grid. "The electric grid in the area where the arrangement is located" means in such a case the electric grid closest to said plant. Thus, the frequency of the electric power may then be controlled to be for instance 70 Hz, which means a possible increase of the power delivered to the electric machines by a factor 1.4 with respect to a frequency of 50 Hz. The electric machines may preferably be 2-pole or 4-pole electric motors. It will then be easier to obtain a higher number of revolutions by using 2-pole electric motors.

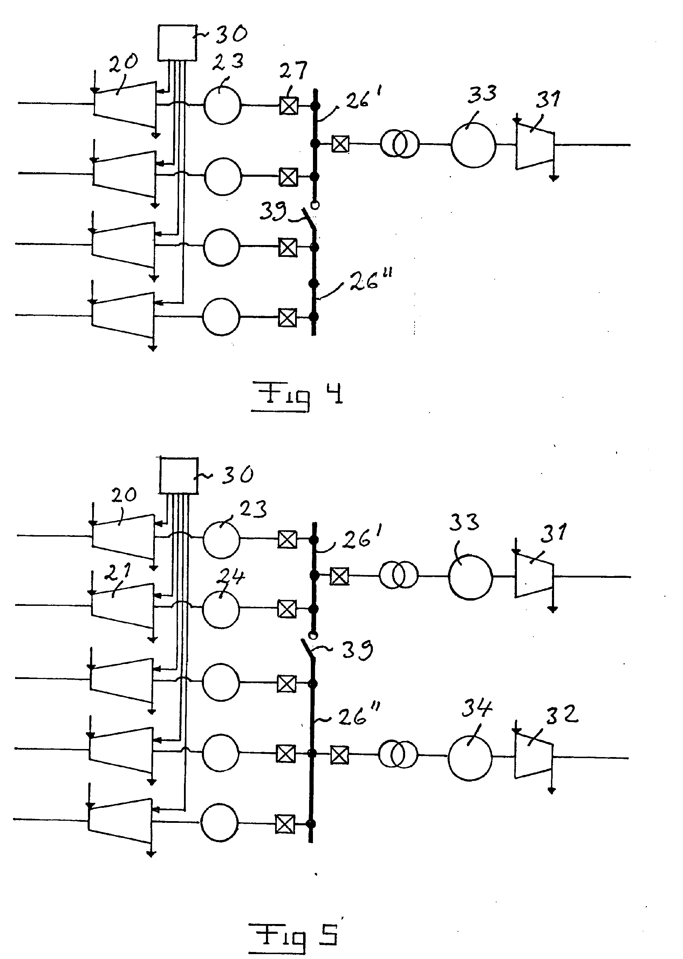

Fig 4 illustrates an arrangement according to a second embodiment of the invention, which differs from that shown in Fig 3 by the fact that it has only one compressor 31 with electric machine 33, and that the bus bar is divided into two bus bar parts 26', 26". Means 39 in the form of a switch is arranged for optionally interconnecting the two bus bar parts. The arrangement of the switch 39 makes it possible to disconnect a part of the device arranged to deliver electric power for operation of the electric machine for maintenance. The switch 39 may also be used in addition to said members 27-29 for controlling the number of couples of gas turbine and electric machine utilized for delivering electric power to said electric machine 33.

Fig 5 illustrates a third embodiment of the invention, which differs from the one shown in Fig 4 mainly by the fact that a compressor 32 with electric machine 34 is connected to the bus bar 26". The arrangement of the switch 39 makes it possible to either drive the two compressors with an electric power of the same frequency and by that with the same speed or feeding electric power with different frequencies to the two electric machines and by that driving the compressors with different speeds. It may for instance under certain conditions be impossible or not desirable to operate the two compressors at the same speed, and different speed operation may then be easily obtained by opening the switch 39 and control the gas turbines associated with the two bus bar parts differently.

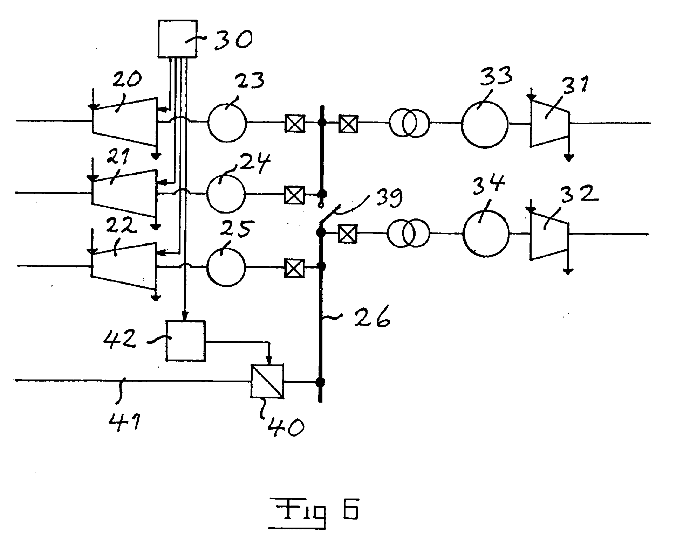

Fig 6 illustrates an arrangement according to a fourth embodiment of the invention, which differs from those discussed above by the fact that it comprises a Voltage Source Converter 40 adapted to connect a High Voltage Direct Current network 41 to a bus bar 26 for feeding electric power for said electric machine operation. Means 42 is adapted to receive information from the apparatus 30 about the control of the gas turbines 20-22 and by that of the frequency of the electric power delivered by the different electric generators for controlling said Voltage Source Converter to deliver an alternating voltage of the same frequency to the bus bar 26. Thus, said High Voltage Direct Current network may in this way be used to assist the couples of gas turbine and electric generator to deliver the electric power needed for the operation of the electric machines 33, 34 driving the compressors 31, 32. The gas turbines may by this be dimensioned smaller or a lower number of such gas turbines may be used than without the connection of the High Voltage Direct Current network. The reliability and availability of the arrangement may also be increased by these two different ways of delivering said electric power with a variable frequency.

The invention is of course not in any way restricted to the embodiments described above, but many possibilities to modifications thereof will be apparent to a person with ordinary skill in the art without departing from the basic idea of the invention as defined in the appended claims.

The number of couples of gas turbines and electric generators as well as of high power compressors and electric motors may be different than shown in the Figures, and any combination thereof is possible. This also involves different numbers of bus bar parts optionally connected or disconnected with respect to each other.

Although it has been shown in the figures of the appended drawings that one electric machine is used to drive each compressor, it is well possible to arrange two or more electric machines on the same shaft to drive one compressor for increasing the power.

## Claims

1. An arrangement for compressing a gas or fluid, comprising:
■ at least one high power compressor (31, 32),
■ at least one electric machine (33, 34) for each said high power compressor, said machine being arranged to drive said compressor,
■ a device adapted to deliver electric power for operation of each said electric machine,
■ an apparatus (30) adapted to adjust the frequency of electric power for said electric machine operation,
said device comprising at least one electric generator (23-25) and at least one gas turbine (20-22) adapted to drive said generator for generating electric power for said electric machine operation,
**characterised in that** said apparatus comprises means (50) configured to control the rotational speed of an output shaft (51) of said gas turbine (20-22) so as to control the frequency of said electric power for said electric machine operation,
and that said means (50) is adapted to control the rotational speed of said output shaft of the gas turbine (20-22) for delivering electric power for said electric machine operation of a frequency being substantially higher than the frequency of an electric grid in the area where the arrangement is located and at least 65 Hz.

2. An arrangement according to claim 1, **characterized in that** the frequency is 65 Hz - 80 Hz, preferably above 70 Hz and most preferred 68 Hz - 72 Hz.

3. An arrangement according to claim 1 or 2, **characterized in that** said arrangement comprises a plurality of couples of a said gas turbine (20-22) and a said electric generator (23-25) connected in parallel with each other.

4. An arrangement according to claim 3, **characterized in that** said means (50) of said apparatus is adapted to provide individual control of the rotational speed of a said output shaft of said gas turbines (20-22).

5. An arrangement according to claim 3, **characterized in that** said couples of gas turbine (20-22) and generator (23-25) are connected to a bus bar (26) in common, and that said electric machine (33, 34) to said at least one high power compressor (31, 32) is connected to said bus bar.

6. An arrangement according to claim 3, **characterized in that** said couples of gas turbine and generator are divided into at least two groups connected to a bus bar part (26', 26") each.

7. An arrangement according to claim 6, **characterized in that** it comprises means (39) for optionally interconnecting at least two said bus bar parts (26', 26").

8. An arrangement according to any of claims 3-7, **characterized in that** it comprises members (27-29) adapted to connect and disconnect at least one of said couples of said gas turbine (20-22) and generator (23-25) with respect to a bus bar (26, 26', 26") to which a said electric machine is connected.

9. An arrangement according to any of claims 3-8, **characterized in that** it comprises a plurality of said compressors (31, 32) connected to a bus bar in common connecting to one or more said couples of said gas turbine (20-22) and generator (23-25).

10. An arrangement according to claim 6, **characterized in that** it comprises a plurality of said compressors (31, 32), and that one or more of said compressors are connected to each said bus bar part (26', 26").

11. An arrangement according to claim 7, **characterized in that** it comprises only one compressor (31) connected to one of said bus bar parts (26', 26"), and that said interconnecting means (39) is adapted to be controlled to change the number of couples of gas turbine and generator for feeding electric power to said compressor by interconnecting or disconnecting said bus bar parts.

12. An arrangement according to claim 7, **characterized in that** it comprises at least two compressors (31, 32) connected to different said bus bar parts (26', 26").

13. An arrangement according to any of claims 3-12, **characterized in that** said arrangement comprises a Voltage Source Converter (40) adapted to connect a High Voltage Direct Current network (41) to a bus bar for feeding electric power for said electric machine operation, and that said means (50) of said apparatus is adapted to control said Voltage Source Converter to generate an alternating voltage of a frequency corresponding to the electric power frequency obtained by said control of the rotational speed of a said output shaft of a said gas turbine (20-22) of said arrangement.

14. An arrangement according to any of the preceding claims, **characterized in that** each said electric machine (33, 34) for each said high power compressor of said arrangement is adapted to operate at a power exceeding 10 MW, advantageously exceeding 50 MW, preferably being at least 60 MW and most preferred 60-80 MW when controlling said output shaft of a said gas turbine for obtaining a frequency of electric power for said electric machine operation of 70 Hz.

15. An arrangement according to any of the preceding claims, **characterized in that** said at least one compressor (31, 32) is adapted to compress a refrigerant used to cool and/or liquefy a gas.

16. A plant for liquefying natural gas (LNG), **characterized in that** it comprises at least one arrangement according to any of claims 1-15, and that said high power compressor (31, 32) is adapted to compress a refrigerant used to cool and/or liquefy natural gas.

17. A plant according to claim 16, **characterized in that** it comprises a said arrangement having at least two said compressors (31, 32) adapted to compress a said refrigerant, at least one said compressor for precooling natural gas and at least one for liquefying such precooled natural gas.

18. A method for driving a high power compressor (31, 32) by driving an electric machine (33, 34) connected to the compressor, said method comprising the steps of:
controlling a gas turbine (20-22) to drive an electric generator (23-25) for generating electric power, and
feeding said electric power to said electric machine for driving said compressor,
**characterized in that** it further comprises a step of controlling the rotational speed of an output shaft (51) of said gas turbine (20-22) so as to control the frequency of said electric power for operation of said electric machine,
and that said control of the rotational speed of said output shaft of the gas turbine (20-22) is carried out so as to deliver electric power for operation of said electric machine (33, 34) of a frequency being substantially higher than the frequency of an electric grid in the area where the method is carried out and at least 65 Hz.

19. A method according to claim 18, **characterized in that** the frequency is 65 Hz - 80 Hz, preferably above 70 Hz and most preferred 68 Hz - 72 Hz.

20. A method for operating a plant for liquefying natural gas (LNG), said plant having an arrangement comprising at least one high power compressor (31, 32) adapted to compress a refrigerant used to cool and/or liquefy natural gas, an electric machine (33, 34) for each said high power compressor and a gas turbine (20-22) adapted to drive an electric generator (23-25),
in which the method comprises the steps of:
controlling said gas turbine to drive said electric generator for generating electric power, and
feeding said electric power to said electric machine for driving said compressor,
**characterized in that** it comprises a further step of controlling the rotational speed of an output shaft (51) of said gas turbine (20-22) so as to control the frequency of said electric power for operation of said electric machine (33, 34),
and that said control of the rotational speed of said output shaft of the gas turbine (20-22) is carried out so as to deliver electric power for operation of said electric machine (33, 34) of a frequency being substantially higher than the frequency of the electric grid in the area where the method is carried out and at least 65 Hz.

21. A method according to claim 20, **characterized in that** the frequency is 65 Hz - 80 Hz, preferably above 70 Hz and most preferred 68 Hz - 72 Hz.

## Patentansprüche

1. Eine Anordnung zum Komprimieren eines Gases oder Fluids, umfassend
- zumindest einen Hochleistungskompressor (31, 32),
- zumindest eine elektrische Maschine (33, 34) für jeden Hochleistungskompressor, wobei die Maschine eingerichtet ist, den Kompressor zu betreiben,
- eine Vorrichtung, die angepasst ist, elektrische Energie für den Betrieb jede der elektrischen Maschine zu liefern,
- ein Gerät (30), das angepasst ist, die Frequenz der elektrischen Energie für den Betrieb der elektrischen Maschine einzustellen,
wobei das Gerät zumindest einen elektrischen Generator (23- 25) und zumindest eine Gasturbine (20-22) umfasst, die angepasst ist, den Generator zum Erzeugen von elektrischer Energie für den Betrieb der elektrischen Maschine zu betreiben,
**dadurch gekennzeichnet, dass** das Gerät ein Mittel (50) umfasst, das konfiguriert ist, die Rotationsgeschwindigkeit einer Ausgangswelle (51) der Gasturbine (20-22) zu regeln/steuern, um die Frequenz der elektrischen Energie für den Betrieb der elektrischen Maschine zu regeln/steuern, und dass das Mittel (50) angepasst ist, die Rotationsgeschwindigkeit der Ausgangswelle der Gasturbine (20-22) zu regeln/steuern zum Liefern von elektrischer Energie für den Betrieb der elektrischen Maschine mit einer Frequenz, die im Wesentlichen höher ist, als die Frequenz eines elektrischen Netzes in dem Bereich, wo sich die Anordnung befindet, und zumindest 65 Hz beträgt.

2. Anordnung nach Anspruch 1, **dadurch gekennzeichnet, dass** die Frequenz 65-80 Hz, vorzugsweise über 70 Hz und am meisten bevorzugt 68-72 Hz beträgt.

3. Anordnung nach Anspruch 1 oder 2, **dadurch gekennzeichnet, dass** die Anordnung eine Vielzahl von Paaren einer Gasturbine (20-22) und eines elektrischen Generators (23-25) umfasst, die parallel zueinander verbunden sind.

4. Anordnung nach Anspruch 3, **dadurch gekennzeichnet, dass** das Mittel (50) des Geräts angepasst ist, eine individuelle Regelung/Steuerung der Rotationsgeschwindigkeit der Ausgangswelle der Gasturbinen (20-22) bereit zu stellen.

5. Anordnung nach Anspruch 3, **dadurch gekennzeichnet, dass** die Paare von Gasturbine (20-22) und Generator (23-25) mit einem Stromanschluss (26) gemeinsam verbunden sind, und dass die elektrische Maschine (33, 34) mit dem zumindest einen Hochleistungskompressor (31, 32) mit dem Stromanschluss verbunden ist.

6. Anordnung nach Anspruch 3, **dadurch gekennzeichnet, dass** die Paare von Gasturbine und Generator in zumindest zwei Gruppen geteilt wNaturen, wobei jede mit einem Stromanschlussteil (26', 26") verbunden ist.

7. Anordnung nach Anspruch 6, **dadurch gekennzeichnet, dass** sie ein Mittel (39) für das optionale Verbinden der zumindest zwei Stromanschlussteilen (26', 26") umfasst.

8. Anordnung nach einem der Ansprüche 3-7, **dadurch gekennzeichnet, dass** sie Glieder (27-29) umfasst, die angepasst sind, zumindest eines der Paare von Gasturbine (20-22) und Generator (23-25) in Bezug auf einen Stromanschluss (26, 26', 26"), mit dem die elektrische Maschine verbunden ist, zu verbinden und trennen.

9. Anordnung nach einem der Ansprüche 3-8, **dadurch gekennzeichnet, dass** sie eine Vielzahl der Kompressoren (31, 32) umfasst, die mit einem Stromanschluss gemeinsam verbunden sind, der mit einem oder mehreren Paaren von Gasturbine (20-22) und Generator (23-25) verbindet.

10. Anordnung nach Anspruch 6, **dadurch gekennzeichnet, dass** sie eine Vielzahl der Kompressoren (31, 32) umfasst, und dass einer oder mehrere der Kompressoren mit jedem Stromanschlussteil (26', 26") verbunden ist/sind.

11. Anordnung nach Anspruch 7, **dadurch gekennzeichnet, dass** sie nur einen Kompressor (31) umfasst, der mit einem der Stromanschlussteile (26', 26") verbunden ist, und dass das Verbindungsmittel (39) angepasst ist, geregelt/gesteuert zu wNaturen, um die Anzahl der Paare von Gasturbine und Generator zu ändern zum Speisen von elektrischer Energie zum Kompressor durch Verbinden oder Trennen der Stromanschlussteile.

12. Anordnung nach Anspruch 7, **dadurch gekennzeichnet, dass** sie zumindest zwei Kompressoren (31, 32) umfasst, die mit verschiedenen der Stromanschlussteile (26', 26") verbunden sind.

13. Anordnung nach einem der Ansprüche 3-12, **dadurch gekennzeichnet, dass** die Anordnung einen Voltage Source Converter (40) umfasst, der angepasst ist, ein Hochspannungsgleichstromnetzwerk (41) mit einem Stromanschluss zu verbinden zum Speisen von elektrischer Energie für den Betrieb der elektrischen Maschine, und dass das Mittel (50) des Gerätes angepasst ist, den Voltage Source Converter zu regeln/steuern, um eine Wechselspannung einer Frequenz zu erzeugen, die der Frequenz der elektrischen Energie entspricht, die durch die Regelung/Steuerung der Rotationsgeschwindigkeit der Ausgangswelle der Gastrubine (20-22) der Anordnung erhalten wird.

14. Anordnung nach einem der vorangehenden Ansprüche, **dadurch gekennzeichnet, dass** jede elektrische Maschine (33, 34) für jeden Hochleistungskompressor der Anordnung angepasst ist, bei einer Leistung von mehr als 10 MW zu arbeiten, vorteilhafterweise mehr als 50 MW, bevorzugt von mindestens 60 MW und am meisten bevorzugt von 60-80 MW, wenn die Ausgangswelle der Gasturbine zum Erhalten einer Frequenz der elektrischen Energie für den Betrieb der elektrischen Maschine von 70 Hz geregelt/gesteuert wird.

15. Anordnung nach einem der vorangehenden Ansprüche, **dadurch gekennzeichnet, dass** der zumindest eine Kompressor (31, 32) angepasst ist, ein Kühlmittel zu komprimieren, das verwendet wird, ein Gas zu kühlen und/oder zu verflüssigen.

16. Eine Anlage zum Verflüssigen eines Naturgases (liquefied natural gas, LNG), **dadurch gekennzeichnet, dass** sie zumindest eine Anordnung nach einem der Ansprüche 1-15 umfasst, und dass der Hochleistungskompressor (31, 32) angepasst ist, ein Kühlmittel zu komprimieren, das verwendet wird, das Naturgas zu kühlen und/oder zu verflüssigen.

17. Anlage nach Anspruch 16, **dadurch gekennzeichnet, dass** sie die Anordnung umfasst, die zumindest zwei Kompressoren (31, 32) aufweist, wobei die Kompressoren angepasst sind, das Kühlmittel zu komprimieren, zumindest einer der Kompressoren zum Vorkühlen des Naturgases und zumindest einer zum Verflüssigen eines solchen vorgekühlten Naturgases.

18. Ein Verfahren zum Betreiben eines Hochleistungskompressors (31, 32) durch Betreiben einer elektrischen Maschine (33, 34), die mit dem Kompressor verbunden ist, wobei das Verfahren die Schritte umfasst:
Regeln/Steuern einer Gasturbine (20-22), um einen elektrischen Generator (23-25) zum Erzeugen von elektrischer Energie zu betreiben, und
Speisen der elektrischen Energie an die elektrische Maschine zum Betreiben des Kompressors,
**dadurch gekennzeichnet, dass** es weiterhin einen Schritt des Regelns/Steuerns der Rotationsgeschwindigkeit einer Ausgangswelle (51) der Gasturbine (20-22) umfasst, um die Frequenz der elektrischen Energie für den Betrieb der elektrischen Maschine zu regeln/steuern, und dass die Regelung/Steuerung der Rotationsgeschwindigkeit der Ausgangswelle der Gasturbine (20-22) ausgeführt wird, um elektrische Energie zum Betrieb der elektrischen Maschine (33, 34) mit einer Frequenz zu liefern, die im Wesentlichen höher ist, als die Frequenz eines elektrischen Netzes in dem Bereich, in dem das Verfahren ausgeführt wird, und mindestens 65 Hz beträgt.

19. Verfahren nach Anspruch 18, **dadurch gekennzeichnet, dass** die Frequenz 65-80 Hz, vorzugsweise über 70 Hz und am meisten bevorzugt 68-72 Hz beträgt.

20. Verfahren zum Betreiben einer Anlage zum Verflüssigen eines Naturgases (liquefied natural gas, LNG), wobei die Anlage eine Anordnung aufweist, die zumindest einen Hochleistungskompressor (31, 32), der angepasst ist, ein Kühlmittel zu komprimieren, das verwendet wird, ein Ergas zu kühlen und/oder zu verflüssigen, eine elektrische Maschine (33, 34) für jeden Hochleistungskompressor und eine Gasturbine (20-22) umfasst, die angepasst ist, einen elektrischen Generator (23-25) zu betreiben,
in welcher das Verfahren die Schritte umfasst:
Regeln/Steuern der Gasturbine, um den elektrischen Generator zum Erzeugen von elektrischer Energie zu betreiben, und
Speisen der elektrischen Energie an die elektrische Maschine zum Betreiben des Kompressors,
**dadurch gekennzeichnet, dass** es einen weiteren Schritt des Regelns/Steuerns der Rotationsgeschwindigkeit einer Ausgangswelle (51) der Gasturbine (20-22) umfasst, um die Frequenz der elektrischen Energie für den Betrieb der elektrischen Maschine (33, 34) zu regeln/steuern, und dass die Regelung/Steuerung der Rotationsgeschwindigkeit der Ausgangswelle der Gasturbine (20-22) ausgeführt wird, um elektrische Energie für den Betrieb der elektrischen Maschine (33, 34) mit einer Frequenz zu liefern, die im Wesentlichen höher ist, als die Frequenz eines elektrischen Netzes in dem Bereich, in dem das Verfahren ausgeführt wird, und mindestens 65 Hz beträgt.

21. Verfahren nach Anspruch 20, **dadurch gekennzeichnet, dass** die Frequenz 65-80 Hz, vorzugsweise über 70 Hz und am meisten bevorzugt 68-72 Hz beträgt.

## Revendications

1. Agencement pour comprimer un gaz ou un fluide, comprenant :
au moins un compresseur de grande puissance (31, 32),
au moins une machine électrique (33, 34) pour chaque dit compresseur de grande puissance, ladite machine étant agencée pour entraîner ledit compresseur,
un dispositif adapté pour délivrer du courant électrique pour le fonctionnement de ladite machine électrique,
un dispositif (30) adapté pour régler la fréquence du courant électrique pour le fonctionnement de ladite machine électrique,
ledit dispositif comprenant au moins un générateur électrique (23-25) et au moins une turbine à gaz (20-22) adaptée pour entraîner ledit générateur pour générer un courant électrique pour le fonctionnement de ladite machine électrique,
**caractérisé en ce que** ledit dispositif comprend des moyens (50) configurés pour commander la vitesse de rotation d'un arbre de sortie (51) de ladite turbine à gaz (20-22) de façon à commander la fréquence dudit courant électrique pour le fonctionnement de ladite machine électrique,
et **en ce que** lesdits moyens (50) sont adaptés pour commander la vitesse de rotation dudit arbre de sortie de la turbine à gaz (20-22) pour délivrer un courant électrique pour le fonctionnement de ladite machine électrique d'une fréquence étant sensiblement supérieure à la fréquence d'un réseau électrique dans la zone où l'agencement est situé, et d'au moins 65 Hz.

2. Agencement selon la revendication 1, **caractérisé en ce que** la fréquence est de 65 - 80 Hz, de préférence au-dessus de 70 Hz et plus préférablement de 68 - 72 Hz.

3. Agencement selon la revendication 1 ou 2, **caractérisé en ce que** ledit agencement comprend une pluralité de couples d'une dite turbine à gaz (20-22) et d'un dit générateur électrique (23-25) connectés en parallèle.

4. Agencement selon la revendication 3, **caractérisé en ce que** lesdits moyens (50) dudit dispositif sont adaptés pour permettre une commande individuelle de la vitesse de rotation dudit arbre de sortie desdites turbines à gaz (20-22).

5. Agencement selon la revendication 3, **caractérisé en ce que** lesdits couples de turbine à gaz (20-22) et de générateur électrique (23-25) sont connectés à une barre de bus (26) en commun, et **en ce que** ladite machine électrique (33, 34) au dit au moins un compresseur de grande puissance (31, 32) est connectée à ladite barre de bus (26).

6. Agencement selon la revendication 3, **caractérisé en ce que** lesdits couples de turbine à gaz et de générateur sont divisés en au moins deux groupes connectés chacun à une partie de barre de bus (26', 26").

7. Agencement selon la revendication 6, **caractérisé en ce qu'**il comprend des moyens (39) pour interconnecter en option au moins deux desdites parties de barre de bus (26', 26").

8. Agencement selon l'une quelconque des revendications 3-7, **caractérisé en ce qu'**il comprend des éléments (27-29) adaptés pour connecter et déconnecter au moins l'un desdits couples desdits turbine à gaz (20-22) et générateur (23-25) par rapport à une barre de bus (26, 26', 26") à laquelle une dite machine électrique est connectée.

9. Agencement selon l'une quelconque des revendications 3-8, **caractérisé en ce qu'**il comprend une pluralité desdits compresseurs (31, 32) connectés à une barre de bus en commun connectant un ou plusieurs desdits couples de turbine à gaz (20-22) et de générateur (23-25).

10. Agencement selon la revendication 6, **caractérisé en ce qu'**il comprend une pluralité desdits compresseurs (31, 32), et **en ce qu'**un ou plus desdits compresseurs sont connectés à chaque partie de barre de bus (26', 26").

11. Agencement selon la revendication 7, **caractérisé en ce qu'**il comprend seulement un compresseur (31) connecté à l'une desdites parties de barre de bus (26', 26"), et **en ce que** lesdits moyens d'interconnexion (39) sont adaptés pour être commandés pour changer le nombre de couples de turbine à gaz et de générateur pour fournir du courant électrique au dit compresseur en interconnectant ou déconnectant lesdites parties de barre de bus.

12. Agencement selon la revendication 7, **caractérisé en ce qu'**il comprend au moins deux compresseurs (31, 32) connectés à différentes desdites parties de barre de bus (26', 26").

13. Agencement selon l'une quelconque des revendications 3-12, **caractérisé en ce que** ledit agencement comprend un convertisseur de source de tension (40) adapté pour connecter un réseau de courant continu à haute tension (41) à une barre de bus pour fournir du courant électrique pour le fonctionnement de ladite machine électrique, et **en ce que** lesdits moyens (50) dudit dispositif sont adaptées pour commander ledit convertisseur de source de tension pour générer une tension alternative d'une fréquence correspondant à la fréquence de courant électrique obtenue par ladite commande de la vitesse de rotation d'un dit arbre de sortie d'une dite turbine à gaz (20-22) dudit agencement.

14. Agencement selon l'une quelconque des revendications précédentes, **caractérisé en ce que** chaque dite machine électrique (33, 34) pour chaque dit compresseur de grande puissance dudit agencement est adaptée pour fonctionner à une puissance dépassant 10 MW, avantageusement dépassant 50 MW, de préférence étant d'au moins 60 MW et plus préférablement de 60-80 MW lors de la commande dudit arbre de sortie d'une dite turbine à gaz pour obtenir une fréquence du courant électrique pour le fonctionnement de ladite machine électrique de 70 Hz.

15. Agencement selon l'une quelconque des revendications précédentes, **caractérisé en ce que** ledit au moins un compresseur (31, 32) est adapté pour comprimer un réfrigérant utilisé pour refroidir et/ou liquéfier un gaz.

16. Usine de liquéfaction de gaz naturel (LNG), **caractérisée en ce qu'**elle comprend au moins un agencement selon l'une quelconque des revendications 1-15, et **en ce que** ledit compresseur de grande puissance (31, 32) est adapté pour comprimer un réfrigérant utilisé pour refroidir et/ou liquéfier du gaz naturel.

17. Usine selon la revendication 16, **caractérisée en ce qu'**elle comprend un dit agencement ayant au moins deux dits compresseurs (31, 32) adaptés pour comprimer un dit réfrigérant, au moins un dit compresseur pour prérefroidir du gaz naturel et au moins un pour liquéfier un tel gaz naturel prérefroidi.

18. Procédé d'entraînement d'un compresseur de grande puissance (31, 32) en entraînant une machine électrique (33, 34) connectée au compresseur, ledit procédé comprenant les étapes consistant à :
commander une turbine à gaz (20-22) pour entraîner un générateur électrique (23-25) pour générer du courant électrique, et
fournir ledit courant électrique à ladite machine électrique pour entraîner ledit compresseur,
**caractérisé en ce qu'**il comprend en outre une étape consistant à commander la vitesse de rotation d'un arbre de sortie (51) de ladite turbine à gaz (20-22) de façon à commander la fréquence dudit courant électrique pour le fonctionnement de ladite machine électrique,
et **en ce que** ladite commande de la vitesse de rotation dudit arbre de sortie de la turbine à gaz (20-22) est réalisée de façon à délivrer un courant électrique pour le fonctionnement de ladite machine électrique (33, 34) d'une fréquence étant sensiblement supérieure à la fréquence d'un réseau électrique dans la zone où le procédé est réalisé, et, d'au moins 65 Hz.

19. Procédé selon la revendication 18, **caractérisé en ce que** la fréquence est de 65 - 80 Hz, de préférence au-dessus de 70 Hz et plus préférablement de 68 - 72 Hz.

20. Procédé pour faire fonctionner une usine de liquéfaction de gaz naturel (LNG), ladite usine ayant un agencement comprenant au moins un compresseur de grande puissance (31, 32) adapté pour comprimer un réfrigérant utilisé pour refroidir et/ou liquéfier du gaz naturel, une machine électrique (33, 34) pour chaque dit compresseur de grande puissance et une turbine à gaz (20-22) adaptée pour entraîner un générateur électrique (23-25),
dans lequel le procédé comprend les étapes consistant à :
commander ladite turbine à gaz pour entraîner ledit générateur électrique pour générer du courant électrique, et
fournir ledit courant électrique à ladite machine électrique pour entraîner ledit compresseur,
**caractérisé en ce qu'**il comprend une autre étape consistant à commander la vitesse de rotation d'un arbre de sortie (51) de ladite turbine à gaz (20-22) de façon à commander la fréquence dudit courant électrique pour le fonctionnement de ladite machine électrique (33, 34),
et **en ce que** ladite commande de la vitesse de rotation dudit arbre de sortie de la turbine à gaz (20-22) est réalisée de façon à délivrer un courant électrique pour le fonctionnement de ladite machine électrique (33, 34) d'une fréquence étant sensiblement supérieure à la fréquence d'un réseau électrique dans la zone où le procédé est réalisé, et, d'au moins 65 Hz.

21. Procédé selon la revendication 20, **caractérisé en ce que** la fréquence est de 65 - 80 Hz, de préférence au-dessus de 70 Hz et plus préférablement de 68 - 72 Hz.
